# EUROPEAN PATENT APPLICATION

(11) **EP 1 089 202 A1**
(43) Date of publication of application: **04.04.2001**
(21) Application number: 99810882.3
(22) Date of filing: 30.09.1999
(51) Int. Cl.: G06F 17/30

(54) **Method for management and processing of data**

(71) Applicant: ABB RESEARCH LTD., 8050 Zürich (CH)
(72) Inventor: Kaiser, Michael Dr., 5408 Ennetbaden (CH); Laasch, Christian Dr., 8037 Zürich (CH); Hasse, Haiyan Dr., 8046 Zürich (CH); Sinkwitz, Rainer Dr., 5413 Birmenstorf (CH)
(74) Representative: Clerc, Natalia

(57) **Abstract**

A data management system stores data in a data base (1) in object oriented manner. Some of the attributes of the objects (5a, 5b) are stored in files (2) external to the data base. The system can run tasks to generate and/or modify its data. Each task is described by a task description (4). For running legacy applications that do not know about the internal structure of the data base, the task descriptions contain information on how to prepare the data for the legacy applications given at least one object in the data base. In this way, legacy applications can be used on the data in the data base in transparent manner.

## Description

### Technical Field

The invention relates to a method for the management and processing of data as defined in the preamble of the independent claim.

### Background Art

The design of new products, the modelling of complicated systems, as well as the management and processing of other kind of data require an means for identifying data, running tasks, tracing changes, etc., in particular in multi-user environments. Software solutions for providing such support are e.g. called Workflow Management Systems (WFMS), Product Data Management Systems (PDMS), or Engineering Data Management Systems (EDMS). In the following, these solutions are generically called Data Management Systems (DMS).

Processing of data within such contexts is often carried out by a variety of software tools, i.e. software applications external to the DMS. For example, a team working on the design of a turbine blade will use CAD software as well as packages for the analysis of aerodynamic and mechanical characteristics of the blades and the turbine.

Integration of such software tools into a Data Management System is a key issue for efficient solutions. In particular, it should be completely transparent which kind of information is currently required and where it comes from, provided that it is already somewhere within the DMS. For so called "legacy applications", which do not have an interface designed for data interchange with the DMS, this problem has not yet been solved satisfactorily.

Known solutions rely on the user of such applications to transfer the data between the DMS and the application. Other approaches provide "middleware" solutions or scripts forming an additional layer between the applications and the DMS.

### Disclosure of the Invention

Hence, the problem to be solved by the present invention is to provide a method of the type mentioned above that offers good integration of external applications into a DMS.

This problem is solved by the method according to claim 1.

Hence, data for at least some of the objects within the data base is stored in separate attribute files. The task descriptions identify the software applications that must be run. They also identify, given an instance of an object, at least one attribute of said object that is accessed by said application. The attribute file associated to this attribute is passed for read and/or write access to the application. This provides a way for accessing legacy applications from a modern DMS that is transparent to the normal user of the DMS.

Preferably, application descriptions are provided for the applications that can be run. These descriptions describe how to run each application and, preferably, how to prepare at least one of said attribute files for access by said application. The task descriptions can then refer to such an application description for executing a program. The application descriptions can e.g. be implemented as scripts.

Further preferred features, advantages and applications of the invention are given in the dependent claims as well as in the following description.

### Brief Description of the Drawings

The invention will be better understood and objects other than those set forth above will become apparent when consideration is given to the following detailed description thereof. Such description makes reference to the annexed drawings, wherein:
Fig. 1 is a logical set-up of an embodiment of a DMS according to the present invention,
Fig. 2 shows the data stored in an instance of a blade object,
Fig. 3 is part of a task description for carrying out life time prediction,
Fig. 4 is a flow chart illustrating how to prepare the input files before running an application, and
Fig. 5 is a flow chart illustrating how to clean up the files after running an application.

### Modes for Carrying Out the Invention

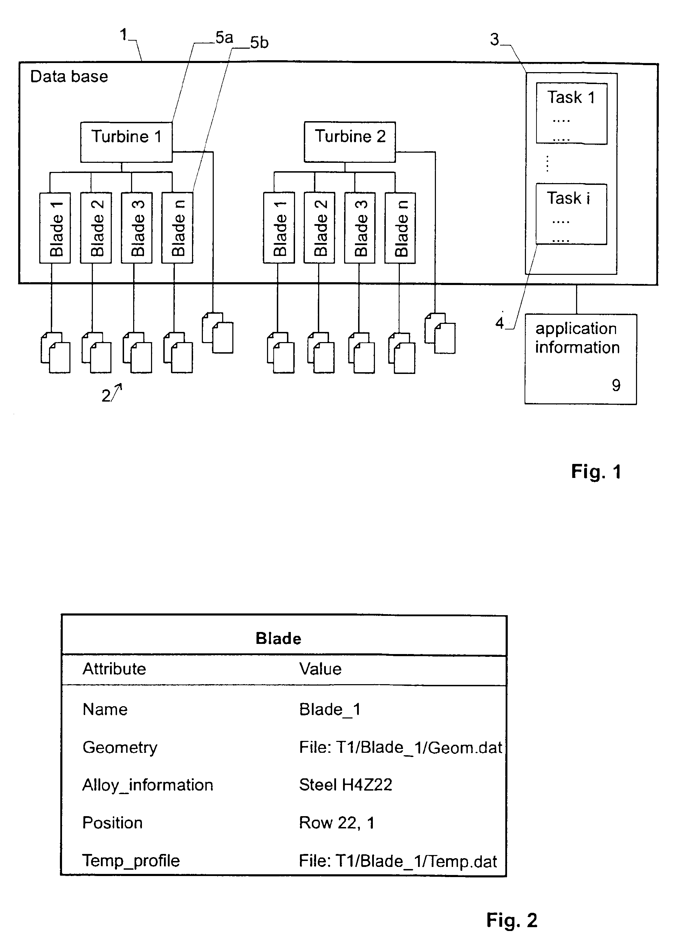

Fig. 1 shows the basic design of a simple embodiment of a DMS for carrying out the present invention. The described implementation is a simple system for managing the development of a turbine. In real applications, the system may be more complex than the one shown, but the basic principles will still apply.

The DMS comprises a data base 1, which stores data as instances of objects. In the embodiment shown here, the data base stores two instances 5a of turbine objects (e.g. with different parameters or configurations) and a series of instances 5b of blade objects for each turbine.

Attribute information is associated with each instance of an object. The attribute information describes the attributes of the instance. The attributes are either stored internally in conventional manner within the data base 1 or externally in files 2. These files are called attribute files and they are maintained outside the data base 1.

Fig. 2 shows an example of an instance of the blade object, which has e.g. five attributes. The attributes "Name", "Alloy_information" and "Position" are stored within the data base 1, while the values of the attributes "Geometry" and "Temp_profile" refer to files that are external to the data base 1.

Each object may have zero, one or more attributes that are stored in external attribute files.

The user of the DMS can carry out several tasks on the data stored in the DMS. In the present embodiment, such tasks can e.g. be
- Calculate the life time of a blade
- Calculate a temperature profile of the turbine
- Visualise the temperature profile of the turbine
- etc.

Many of these tasks require to run legacy applications that are external to the DMS. For instance, there may be a Fortran program "TMP_ANAL" that calculates the temperature profile within a blade given the blade's geometry and temperature data for the blade's environment. TMP_ANAL expects its in- and output files to be at a certain location and in a certain format. The present system provides a transparent way for accessing such legacy application from the DMS as described in the following.

The DMS contains a list 3 of several task descriptions 4. Each task description contains instructions on how to carry out a task.

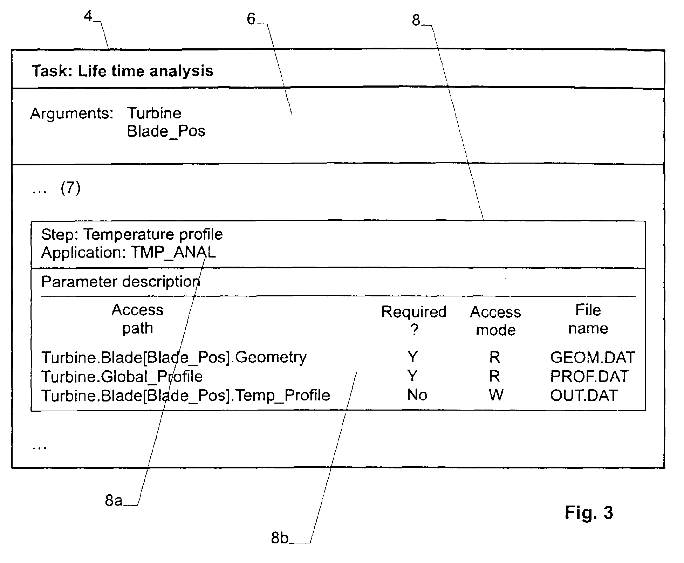

Fig. 3 shows the information that is stored in a typical task description, e.g. for carrying out life time prediction for a blade.

The task description 4 for the life time analysis comprises a first part 6 that defines the arguments required by the task. These arguments are usually instances of objects, but they can also be of other types, e.g. Boolean values, strings, etc.

In the present case, the arguments are a turbine and a blade, wherein the latter is specified by its position Blade_pos within the turbine. The DMS can e.g. provide a graphic user interface for letting the user specify these parameters when running the task.

Further, the task description 4 contains a list 7 of steps to be carried out when executing the task.

In the present example, the list 7 may e.g. comprise a first step (not shown in detail) for preparing data, e.g. for calculating a global temperature profile of the turbine, and associating it as parameter file with the attribute "Global_Profile" of the turbine.

A second step 8 of the task description 4 describes the call of the application TMP_ANAL. It contains a reference 8a to the application and a parameter information section 8b describing how to prepare the input files for TMP_ANAL and how to retrieve the output file generated by TMP_ANAL. TMP_ANAL e.g. expects a first input file named GEOM.DAT describing the blade's geometry and position and a second input file named PROF.DAT describing the global temperature profile in the turbine. TMP_ANAL generates an output file OUT.DAT describing the temperature profile within the turbine.

For each of these files, the parameter information 8b describes how to locate it. For instance, the file GEOM.DAT belongs to the attribute "Geometry" of the blade specified by Blade_pos in the given turbine. Hence, the corresponding file can be retrieved by first finding the attribute Geometry of the blade
Turbine.Blade[Blade_pos].
The value of this attribute is the path that leads to the desired file.

Similarly, the path to the file PROF.DAT can be located by looking at the value of the attribute Global_Profile of the given turbine.

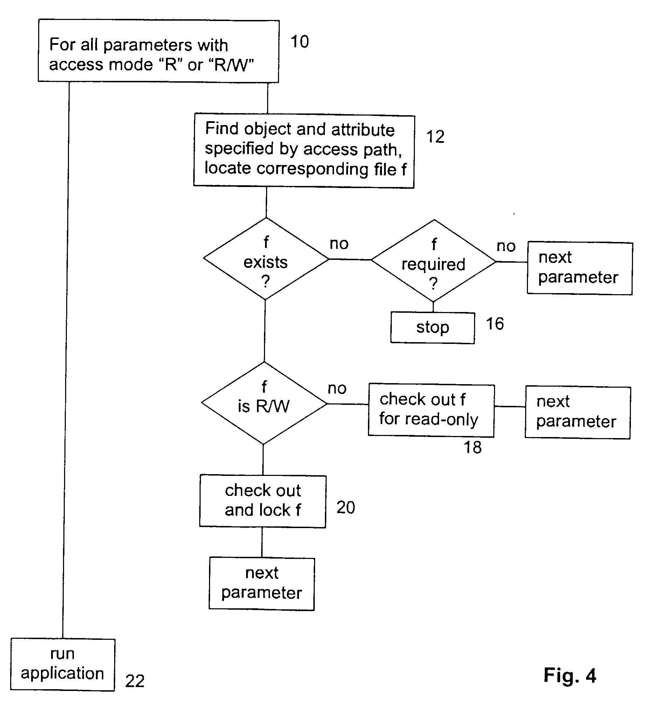

Fig. 4 shows how these files are prepared for read-access before running TMP_ANAL.

The DMS cycles through the files in the list of parameters in the parameter information 8b (step 10). The object and attribute specified by the field "Access path" is located. The value of the attribute (which is the path to the attribute file) is retrieved (step 12). The DMS checks if the file is present (step 14). If the file is not present, the entry "Required ?" for the given parameter is checked. If this entry contains "N", the corresponding file is not absolutely required for running the application, hence operation can continue with the next parameter. If the entry "Required ?" contains "Y", running the application is impossible and operation stops (step 16).

If the file exists, the DMS checks the entry "Access mode" of the parameter. This entry can have the values "R" (read only), "R/W" (read and write) or "W" (write only), specifying how the application accesses the given file. If the access mode is "R", the file is checked out of the data base, i.e. marked as being read-only for the data base (step 18). If the access mode is "R/W", the file is checked out and locked (i.e. marked as being busy and non-readable) for the data base (step 20).

Once all the input parameters for the application are processed in this way, the application is run (step 22). This may involve the following steps:
(a) Retrieving the path of the application (including information on where the application resides and how it is run), which is stored elsewhere within or outside the DMS, in an application information file 9 containing information about each application.
(b) Retrieving further details from the application information file 9, such as information describing how to prepare files for access by the application. An application may e.g. require local copies of its input files. If yes, copies must be created of the corresponding files in a local directory that can be accessed by the application and, after running the application, files modified by it must be copied back.
(c) Running the application using the information of step (a) above and specifying the parameter files, e.g. by passing the path of the parameter files to the application.
The application information file 9 can contain the above information in a table or record structure that is interpreted by the DMS. Part or all of this information may, however, also be encoded in the form of a script that may e.g. be interpreted by a command line interpreter.

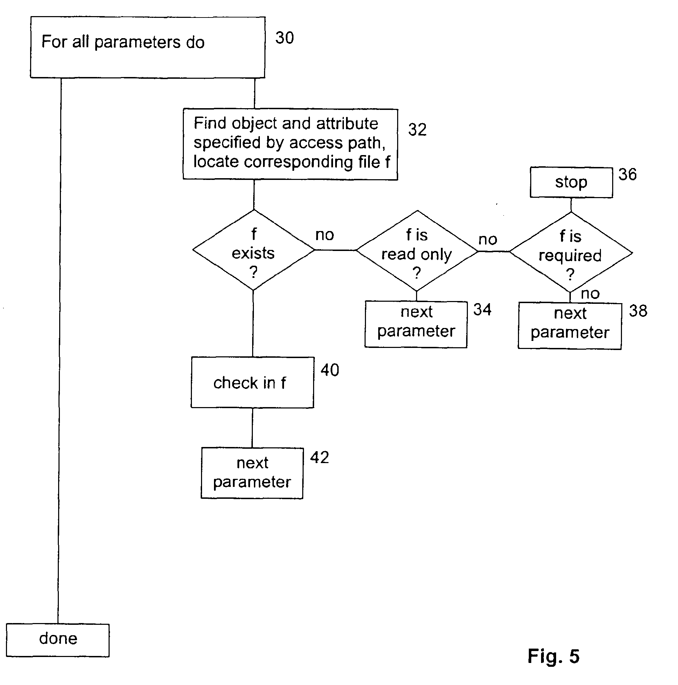

After running the application, the DMS again runs through the parameter information 8a, identifying each file, as shown in step 30 of Fig. 5. Each file is located (step 32). If it does not exist, the DMS checks if the file is read-only. If yes, operation continues with the next file (step 34). If the file is marked as "R/W" or "W", the DMS checks if it is required. If yes, an error has occurred and operation stops (step 36), otherwise operation continues with the next file (step 38). If the file exists, it is checked (back) into the data base (i.e. it is available to the data base for read and write access, step 40) and operation continues with the next file (step 42).

After executing step 8a of the task description 4 in Fig. 3, the DMS may execute further steps, e.g. for calculating an expected life time of the blade given its temperature profile.

When a user wishes to run a task, he identifies the objects (and any further parameters) specified in the first part 5 of the task description 4. Then, the DMS carries out the above steps for executing the task as defined in the task description. Besides calls of legacy applications as illustrated above, the task description can contain other steps as well, e.g. for calling "modern" applications that can directly access the data in the data base.

Reference numerals:
1: object oriented data base
2: attribute files
3: task list
4: task description
5a, 5b: object instances
6: first part of task description
7: list of steps in task description
8: one step in task description
8a: reference to application
8b: parameter information
9: application information
10 - 22: steps for preparing input files
30 - 42: steps for cleaning up input files

## Claims

1. A method for data management and processing, wherein in a data base (1) data is stored as instances (5a, 5b) of objects with attributes, and tasks are stored as task descriptions (4) operating on said instances of objects and their attributes, wherein for each instance of an object attribute values for said attributes are stored within said data base, characterised by the steps of
a) storing, in the attribute values of at least some instances of said objects, at least one pointer designating an attribute file (2) external to said data base, wherein said attribute file contains attribute data associated with the corresponding attribute,
b) storing, in at least some of said task descriptions:
- at least one reference (8a) identifying a software application external to said data base and
- parameter information (8b) indicative of at least one of said attributes to be accessed by said application given an instance of an object, and
c) executing at least one of said tasks by identifying at least one instance of an object to be used as parameter object(s), locating at least one attribute file from said parameter information and from said parameter object(s), and running said application, wherein said located file is passed for read and/or write access to said application identified by the task description.

2. The method of claim 1, wherein said located file is passed to said application by generating a copy of said located file.

3. The method of one of the preceding claims comprising the following steps for executing said task:
running said application, wherein said application performs write access to at least one output data file,
checking said output data file or a copy of said output data file into said data base as an attribute file as designated by said parameter information.

4. The method of one of the preceding claims, wherein said parameter information identifies read-only attribute files used as input to said application, read-write attribute files modified by said application, and/or write-only files generated by said application to be checked into said data base as attribute files.

5. The method of one of the preceding claims, further comprising the step of storing, for at least some of said applications external to said data base, application descriptions (9) describing how to run each application.

6. The method of claim 5, wherein said application descriptions comprise scripts.

7. The method of one of the claims 5 or 6, wherein said application descriptions comprise information on how to prepare the located files for access by said applications.

8. The method of one of the preceding claims wherein a path to said located file is passed to said application.
